# EUROPEAN PATENT APPLICATION

(11) **EP 4 245 987 A1**
(43) Date of publication of application: **20.09.2023**
(21) Application number: 22161841.6
(22) Date of filing: 14.03.2022
(51) Int. Cl.: F03D 7/02, F03D 7/04, F03D 9/11, H02J 3/24, H02J 3/38

(54) **CONTROLLING THE PROVISION OF POWER BY A WIND POWER PLANT**

(71) Applicant: Siemens Gamesa Renewable Energy A/S, 7330 Brande (DK)
(72) Inventor: Egedal, Per, 7400 Herning (DK); Stoettrup, Michael, 7400 Herning (DK)
(74) Representative: SGRE-Association

(57) **Abstract**

A method of controlling the provision of electrical power by a wind power plant (100) that comprises at least one wind turbine (110) is provided. The at least one wind turbine (110) is configured to perform an active vibration damping that results in a variation of an active power output of the at least one wind turbine (110). The method comprises obtaining an indication signal (31) that is indicative of a variable power component present in an electrical power output of the wind power plant (100), wherein the variable power component results from the variation of the active power output of the at least one wind turbine (110) caused by the active vibration damping; deriving, from the indication signal (31), a variation compensation signal (35); and compensating at least partially the variable power component in the electrical power output of the wind power plant (100) by controlling an electrical power flow (125) into and out of an energy storage system (120) in accordance with the variation compensation signal (35). The electrical power flow (125) of the energy storage system (120) is combined with the electrical power output of the wind power plant (100).

## Description

### FIELD OF THE INVENTION

A method of controlling the provision of electrical power by a wind power plant that comprises one or more wind turbines that employ active vibration damping is provided. Further, a respective control system that provides control of such electrical power output of the wind power plant is provided.

### BACKGROUND

Wind turbines of a wind power plant are exposed to varying wind conditions and offshore wind turbines are further exposed to waves hitting the foundation. These may cause vibrations of the wind turbine and wind turbine components, which can result in mechanical resonances. For example angular accelerations and decelerations of the wind turbine rotor may be caused by wind shear acting on the rotor blades. Torque oscillations in the drive train may result. The changes in forces and torques experienced by the wind turbine will further lead to tower oscillation, and respective tower movements may result in undesirable loads, which may act on the yaw system of the wind turbine tower, a gear within the wind turbine nacelle and on the tower itself.

To address such problems, the controller of the wind turbine may vary the torque or the power in counter-phase with the movements to damp respective oscillations. The amplitude of a respective damping term (or active vibration damping signal) may for example be about 3% of the rated power. The frequency may depend on the tower structure and soil conditions. The document EP 2 146 093 B1 describes a respective method for damping tower oscillations, in which a variable power offset signal is added to the power reference signal in accordance with which a power converter is operated. The variable power of said signal is based on a side-by-side oscillation of the wind turbine tower. Such power variation may generate a respective torque oscillation that may be phase-shifted by 180° to the torque oscillation applied by the wind, thus resulting in an efficient damping of the oscillations. The document EP 1 643 122 A2 describes a different solution in which a vibration damping system for a wind turbine provides a variable signal to control torque produced by the generator. In particular, a generator demand torque is modulated by providing a signal that is based on changes in the generator rotor speed in order to damp oscillations corresponding to a tower side-to-side resonant frequency and a drive train resonant frequency.

When active vibration damping is applied in multiple wind turbines across a wind power plant, the damping terms may correlate across the wind turbines and may add up to a significant power variation. Such power variation, which is transmitted into the power grid, may cause problems in the electrical power grid. Such problems may even be more pronounced if the power grid has a resonance close to the frequency of the damping term.

To reduce the respective problems, several solutions have been suggested. For example, the amount of active damping may be reduced or active damping may be disabled for at least some wind turbines. This however results in an increase of the loads experienced by the tower and foundation structures and may result in the need to increase the tower stability, which can for example lead to an increase in the amount of steel required by the steel structure in the range of 100 tons.

### SUMMARY

Accordingly, there is a need to mitigate at least some of the drawbacks mentioned above, and in particular to avoid the negative effects associated by respective active vibration damping.

This need is met by the features of the independent claims. The dependent claims describe embodiments of the invention.

According to an embodiment of the invention, a method of controlling the provision of electrical power by a wind power plant that comprises at least one wind turbine is provided. The at least one wind turbine is configured to perform an active vibration damping that results in a variation of an active power output of the at least one wind turbine. The method comprises obtaining an indication signal that is indicative of a variable power component present in an electrical power output of the wind power plant, wherein the variable power component results from the variation of the active power output of the at least one wind turbine caused by the active vibration damping; deriving, from the indication signal, a variation compensation signal; and compensating at least partially the variable power component in the electrical power output of the wind power plant by controlling an electrical power flow into and out of an energy storage system in accordance with the variation compensating signal. The electrical power flow of the energy storage system is combined with the electrical power output of the wind power plant.

Accordingly, a compensated electrical power output may be obtained in which the variable power component is (at least partially) removed by the respective power flow from the energy storage system. The electrical power provided by the wind power plant to a power grid may thus be smoothed, it may in particular not comprise respective power oscillations due to the active vibration damping. Further, there is no need to reduce or to disable the active vibration damping at the at least one wind turbine in order to achieve a respective power output from the plant that has high quality and does not comprise a respective variable power component. Lifetime of the wind turbines may thereby be conserved, the loads on the components may be reduced and wear-and-tear on wind turbine components may be reduced. Accordingly, the risk of failure of the at least one wind turbine may be reduced while still providing electrical power without respective oscillations to a power grid.

Active vibration damping may for example comprise damping of tower vibrations, damping vibrations of a component of the mechanical drive train, such as a generator, gearbox, and the like, damping of blade vibrations, and other active damping measures that result in a variation of the electrical power output of the respective wind turbine. Active vibration damping may in particular comprise actively controlling an electrical power system of the wind turbine, for example actively controlling an active power output and/or a generator torque of a wind turbine generator. Active vibration damping may for example comprise active tower damping. Active vibration damping may for example be performed as described in the document EP 2 146 093 B1 or in the document EP 1 643 122 A2.

The energy storage system may be electrically connected to a power output of the wind power plant, e.g. it may be connected to a point of common coupling (PCC), at which the power plant provides its electrical power output to the power grid. At the point of common coupling, the combination of the electrical power flow from the energy storage device and the electrical power output from the wind power plant may thus be received in combination. It should be clear that a wind power plant may have multiple power outputs, and respective storage devices of the storage system may be coupled to each of such multiple power outputs to provide compensation of the variable power component.

The indication signal may be obtained from the at least one wind turbine, and/or may be based on a measurement of an electrical power at the electrical power output of the wind power plant prior to and/or after the combination with the electrical power flow from the energy storage device. It should further be clear that there does not always need to be an electrical power flow from/to the energy storage device, but that the energy storage device may also operate in an idle (or inactive) state. This may for example be the case if wind turbines are inoperable, if the variable power component is below a certain level, if the storage system is empty, or if there is insufficient wind for operating the wind power plant. The variation compensation signal may in particular be a cancellation signal that effectively causes cancellation of the variable power component by the electrical power flow of the energy storage system. It may thus be a signal that indicates the power level of the variable power component, however with inverse sign so as to cause the cancellation.

In an embodiment, obtaining the indication signal comprises receiving at least one active vibration damping signal from the at least one wind turbine. The active vibration damping signal may be indicative of the variation of the active power output of the at least one wind turbine that is due to the active vibration damping. The indication signal may correspond to or may be derived from the at least one received active vibration damping signal. Information that is available at the at least one wind turbine may thus be used for obtaining the indication signal, which may ensure that the indication signal properly reflects the power variations that are due to the active vibration damping. The active vibration damping signal may be received from each wind turbine of the wind power plant that performs active vibration damping.

The active vibration damping signal may for example correspond to a vibration damping power control signal in accordance with which an electrical power generation of the respective wind turbine is modulated to provide the active vibration damping. It may for example correspond to the power offset signal P_{offset} that is employed in the document EP 2 146 093 B1 for modulating the active power generation by the wind turbine in order to provide active vibration damping. Additionally or alternatively, the active vibration damping signal may be derived from a vibration damping torque control signal in accordance with which a torque of a generator of the respective wind turbine is modulated to provide the active vibration damping. From such torque modulation, a respective modulation of the active power output of the wind turbine can be derived, so that a reliable indication of the variation of the power output of the wind turbine is obtained. The vibration damping torque control signal may for example be generated as described in the document EP 1 643 122 A2. For other types of active vibration damping used in a wind turbine, the active vibration damping signal may correspond or be derived from a different type of signal; deriving it from an active power modulation or a torque modulation are only examples.

The active vibration damping signal may also be termed "active damping term", as it may be the term of the wind turbine control that results in the variable power component present in the power output of the plant. The method may further comprise generating, at the at least one wind turbine (e.g. by a respective wind turbine controller), the active vibration damping signal and performing, at the at least one wind turbine, active vibration damping in accordance with the active vibration damping signal. As mentioned above, the wind turbine controller may for example control an active power set point for the wind turbine power generation to actively damp respective vibrations, and/or may control an electrical torque of the generator of the at least one wind turbine by controlling a torque set point for such generator so as to counter the wind turbine vibrations. It should be clear that a respective modulation to provide active damping is generally performed on top of the respective conventional operating set point, e.g. active power set point or torque set point.

In an embodiment, obtaining the indication signal comprises measuring a power signal at the electrical power output of the wind power plant and/or at a power output of each of the at least one wind turbine and deriving from the measured power signal the indication signal. Since the variable power component is present in the electrical power output, it may be detected and the indication signal may accordingly be derived, which avoids the need for a communication with the wind turbine controllers.

Deriving the indication signal from the measured power signal may for example comprise applying a filter and/or applying a phase-lock loop (PLL) to the measured power signal to obtain the indication signal. A PLL, or a filter such as a Kalman filter, may for example be used to estimate the variable power component that is caused by the active vibration damping. The variable power component may for example lie at one, plural, or within a range of frequencies, which may be known and identified. The variable power component may thus be estimated from the measured power signal. If the power signal is measured before the combination with the power flow from the energy storage system, the control may correspond to a feed forward control. If the power signal is measured after the combining, the control may correspond to a feedback control. The power signal may in the latter case correspond to an error signal that is to be minimized by adjusting the variation compensation signal.

A frequency of the power variation of the variable power component may lie within a range of about 0.05 to 2 Hz, in particular between 0.1 and 0.4 Hz. One or more frequencies within this range may be identified to derive the respective indication signal.

Deriving the variation compensation signal from the indication signal may comprise filtering the indication signal by a filter. Such filter may have a different configuration or comprise different filters depending on how the indication signal is obtained.

The power signal may for example be measured after combining the electrical power flow from the energy storage system with the electrical power output of the wind power plant, and the indication signal may be an error signal. The filter that filters the indication signal may comprise a feedback filter which may have a response that minimizes the error signal, i.e. it may be configured to minimize the variable power component in the combined electrical power output of the wind power plant. The filter response may be a fixed or an adaptive response.

As another example, the power signal may be measured before combining the electrical power flow with the electrical power output of the wind power plant. The filter that filters the indication signal may comprise a feed forward filter. Such feed forward filter may have a response that generates from the indication signal a variation compensation signal that causes cancellation of the variable power component in the combined electrical power output from the plant. Such feed forward filter may have a fixed or adaptive response. For example, the filter response may be adapted based on a respective power signal measured after the combining and thus in response to an error signal.

Respective feedback and feed forward filtering methods are known in the art and may be used with embodiments of the present invention. An LMS (Least Mean Squares) algorithm may for example be used to find a filter response (e.g. filter coefficients) that minimize the variable power component in the combined electrical power output from the plant. A phase-lock loop, correlation and other techniques may be employed to detect components in the electrical power output from the plant that are due to the active vibration damping, and the respective components may be minimized in the combined output.

In an embodiment, the filter that filters the indication signal may comprise a lead filter, in particular a lead compensator. By a respective lead filter, a delay introduced by the processing may be compensated. Removal of the variable power component from the electrical power output of the plant may thereby be improved. This may be particularly beneficial if the indication signal is obtained by receiving the active vibration damping signal from the wind turbines, as indicated above. Any delays in the signal transmission and processing may thereby be compensated.

Deriving the variation compensation signal from the indication signal may comprise inverting the indication signal. Accordingly, if the indication signal indicates an increase in the electrical power output of the wind power plant due to active vibration damping, the variation compensation signal may cause the energy storage system to take up electrical power (i.e. to charge) and if the indication signal indicates a decrease in the electrical power output of the plant due to active vibration damping, the variation compensation signal may cause the energy storage system to give out electrical power (i.e. to discharge). As the indication signal is indicative of the power variations caused by the active vibration damping, it may vary about the mean (zero) value. The variation compensation signal may vary about the same mean (zero) value, however inverted. A negative value of the variation compensation signal may thus correspond to a taking-up of electrical power (charging) of the energy storage system, and a positive value may correspond to an output of electrical power (discharging) of the energy storage system. Accordingly, the electrical power flow of the energy storage system may be controlled efficiently in accordance with the variation compensation signal so as to cancel the variable power component in the electrical power output of the plant.

Controlling the electrical power flow of the energy storage system may comprise transmitting a control signal to a controller of the energy storage system, wherein the control signal may be derived from or may correspond to the variation compensation signal. Such controller may for example be a battery controller, a controller of a thermal storage device, a controller of a hydrogen storage system or the like.

The wind power plant may comprise plural wind turbines, e.g. at least 2, 3, 4, .... Two or more of the plural wind turbines may be configured to perform the active vibration damping. The indication signal may be indicative of the combined variation of the active power output of the two or more wind turbines caused by the active vibration damping. As mentioned above, the variable output of all wind turbines of the plant does not need to be compensated at once, but groups of wind turbines or individual turbines may be compensated with respect to their output power variations by an energy storage system provided for the respective group or wind turbine. The indication signal may then be indicative for the respective group or individual wind turbines. In that sense, such group or individual wind turbine may be considered to constitute a respective wind power plant, the power output of which is compensated as described herein.

Obtaining the indication signal may comprise receiving an active vibration damping signal from each of the two or more wind turbines and combining, in particular adding, the active vibration damping signal received from two or more wind turbines. Intrinsic cancellation effects of the power variations, such as due to a phase shift between the power variations from different wind turbines, may thus be considered.

The disclosed solution may be used both for onshore and offshore wind power plants. In generally, for an offshore wind power plant, the control system, e.g. the plant controller, may be placed onshore or offshore of may be distributed between onshore and offshore, and the storage system may be place onshore or offshore or may be distributed between onshore and offshore. In a particular example, the wind power plant may be an offshore wind power plant, wherein at least the indication signal is obtained by an offshore controller of the wind power plant, the offshore controller being located offshore. The energy storage system may be arranged at an onshore site and may comprise a storage system controller. The offshore controller may be configured to transmit at least one of the indication signal, the variation compensation signal, or a signal derived from any of these to the storage system controller. The storage system controller may control the electrical power flow of the energy storage system based on the respective received signal. Such configuration may have the advantage that the energy storage system can be located onshore, and only a signal needs to be transmitted in order to ensure that at the point of common coupling, the variable power component is compensated in the output power of the plant.

Unless otherwise noted, the electrical power mentioned herein may refer to active electrical power.

According to a further embodiment of the invention, a control system configured to control the provision of electrical power by a wind power plant is provided. The wind power plant comprises at least one wind turbine, wherein the at least one wind turbine is configured to perform an active vibration damping that results in a variation of an active power output of the at least one wind turbine. The control system is further configured to control an electrical power flow into and out of an energy storage system. The electrical power flow of the energy storage system is combined with the electrical power output of the wind power plant, for example by electrically connecting the energy storage system to the point of common coupling. The control system is configured to perform any of the methods disclosed herein, in any of the disclosed variations. By such control system, advantages similar to the ones outlined further above may be achieved.

The control system may comprise or may be implemented as a wind power plant controller. Such plant controller may receive the respective signals from the wind turbines and may provide a respective control signal to the energy storage system. In some implementations, the control system may further comprise the wind turbine controllers of the one or more wind turbines. In some implementations, the control system may further comprise a controller of the energy storage system. It should be clear that the signal processing and derivation may be distributed in different ways among different controllers of such control system, for example between the wind turbine controller(s), the plant controller, and the energy storage system controller. The indication signal may for example be provided to the energy storage system controller which may derive the compensation signal and the respective control signal to control the electrical power flow. As another example, the active vibration damping signal provided from a wind turbine to the plant controller may already include a processed signal, such as a processed torque signal that already indicates the power variations, or may only comprise such torque signal so that derivation of the power variations is performed by the plant controller. A skilled person will understand that all such modifications are within the scope of the present solution.

According to another embodiment, a wind power plant comprising a respective control system, as well as the at least one wind turbine and the energy storage system is provided. The wind power plant may be coupled to a power grid at a point of common coupling (PCC).

The method may be performed by the control system having any of the configurations described herein. The system may be configured to carry out the method of any of the embodiments and examples disclosed herein.

According to another embodiment of the invention, a computer program for controlling the provision of electrical power by a wind power plant is provided. The computer program comprises control instructions which, when executed by a processing unit of a control system that controls an energy storage system, cause the processing unit to perform any of the methods described herein. The computer program, in particular its control instructions, may be provided on a volatile or non-volatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind power plant including a control system according to an embodiment.
Fig. 2 is a schematic drawing showing a control system according to an embodiment.
Fig. 3 is a schematic drawing showing a control system according to a further embodiment.
Fig. 4 is a schematic drawing showing diagrams including active power output, acceleration and active damping term of a wind turbine that performs active vibration damping during operation.
Fig. 5 is a schematic drawing showing a wind power plant including a control system according to an embodiment.
Fig. 6 is a flow diagram illustrating a method of controlling the provision of electrical power by a wind power plant according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

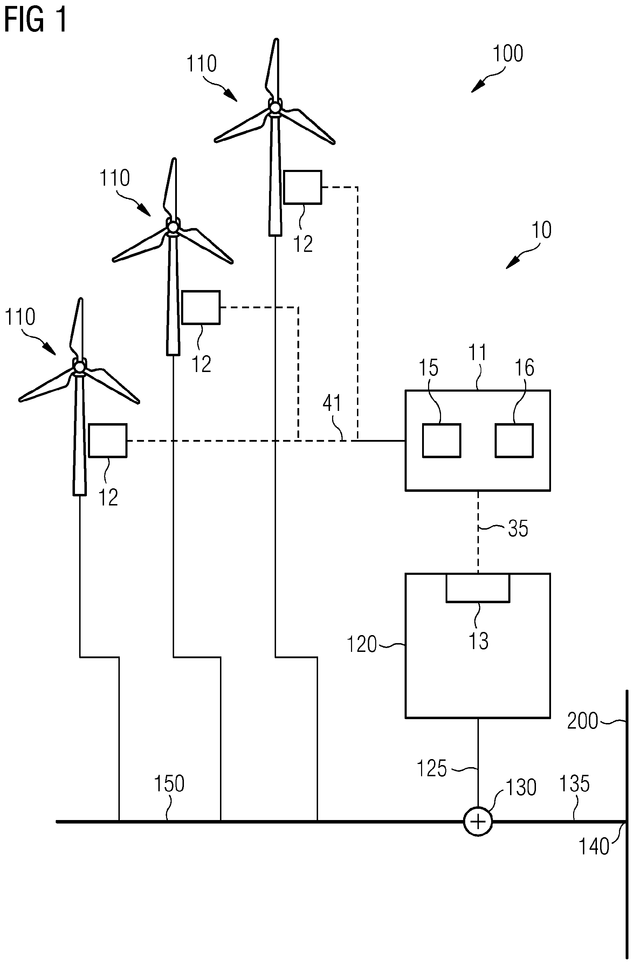

Fig. 1 schematically illustrates a wind power plant 100 that comprises a control system 10 according to an embodiment. The wind power plant 100 comprises plural wind turbines 110 which generate electrical power from wind power. The output electrical power is collected by electrical connections 150, for example a collector grid, which is connected at a point of common coupling (PCC) 140 to a power grid 200, which may for example be a utility grid or other kind of distribution grid. The wind power plant 100 may comprise further components that are common to such plant, such as a substation transformer and the like, which are not shown here. Control system 10 may comprise or may be a wind power plant controller 11 abbreviated as plant controller herein. Plant controller 11 may communicate with a wind turbine controller 12 provided in each wind turbine 110, for example to receive an active vibration damping signal as described in more detail below. Plant controller 11 may further communicate with an energy storage system controller 13 of an energy storage system 120. Plant controller 11 may provide a control signal, such as a variation compensation signal, to the storage system controller 13. Storage system controller 13 may be configured to control the power flow into and out of the energy storage system 120 in accordance with such received control signal, in particular by charging and discharging the energy storage system 120. For this purpose, the energy storage system 120 is connected to the electrical power output of the wind turbines 110, for example by an electrical connection to the point of common coupling 140. Fig. 1 illustrates a summation node 130 for the respective electrical connection in which the electrical power output of the wind turbines collected by collector grid 150 is combined with the electrical power flow 125 from the energy storage system 120. A combined electrical power output 135 of the plant 100 may thereby be obtained, which may also be termed "compensated electrical power output" since the variable power component is compensated therein, as explained further below.

It should be clear that Fig. 1 only illustrates one exemplary configuration of plant 100, and that other configurations are conceivable. For example, energy storage system 120 may be directly coupled to the PCC 140, or may comprise plural individual energy storage devices that are electrically connected to the electrical power outputs of the individual wind turbines 110. It is however preferred that energy storage system 120 is connected to a point at which the power output of at least some of the individual wind turbines (for which compensation is to be provided by the respective storage system 120) has been combined.

Energy storage system 120 may comprise or may be one or a combination of a battery energy storage system (BESS), a thermal energy storage system, a flywheel energy storage system, a hydrogen energy storage system or any other energy storage system capable of being charged by receiving electrical power and of being discharged by providing electrical power.

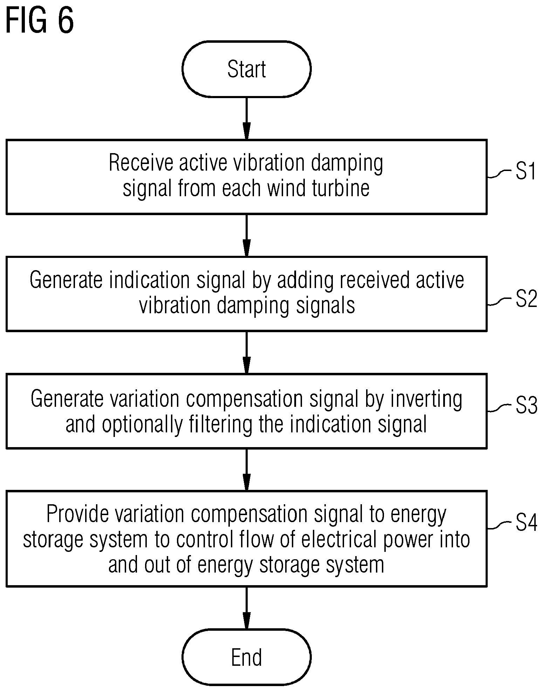

Control system 10 may comprise a processing unit 15, which may comprise a microprocessor, an application specific integrated circuit, a programmable logic device (PLD) such as a field programmable gate array (FPGA), a digital signal processor or the like. It may further comprise a memory 16, which may comprise volatile and non-volatile memory, in particular a hard disc drive, flash memory, RAM, ROM, EEPROM and the like. Memory 16 may store control instructions which when executed by processing unit 15 may cause the processing unit 15 to perform any of the methods disclosed herein. The control instructions, in particular respective software code, may for example implement the method of figure 6. Control system 10 may comprise further components not explicitly shown, such as input/output interfaces between the controller, data sources and components to be controlled, a user interface including a display and an input unit, a bus coupling these components and other components common to a computer system.

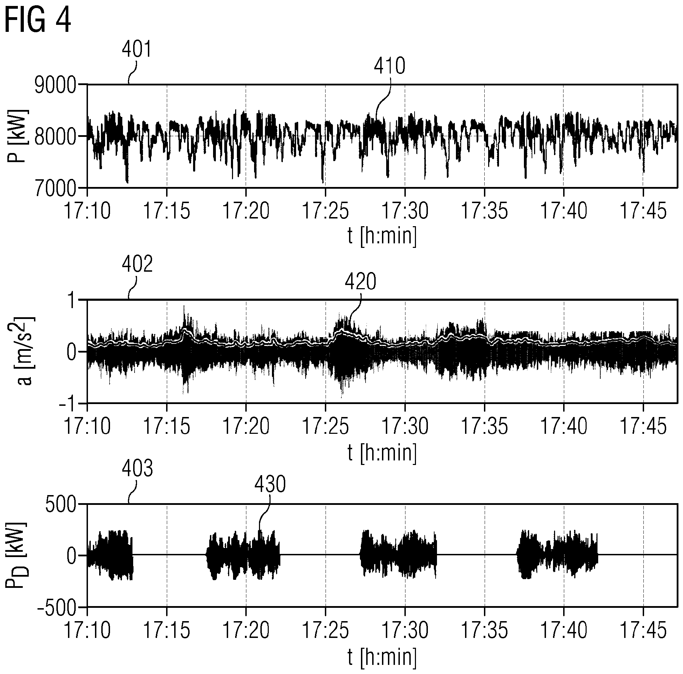

One, two, three or more, preferably all, of the wind turbines 110 of the wind power plant 100 may be configured to perform active vibration damping. Such active vibration damping may be performed in accordance with the method disclosed in any of the above cited documents. Such active vibration damping may add a compensation signal to a reference value, such as an active power set point or a torque set point, in accordance with which the wind turbine operates. The signal is determined so as to counter the wind turbine vibrations, e.g. tower vibrations, component vibrations and the like. Fig. 4 illustrates a typical example of tower damping that may be performed by wind turbines 110. Diagram 401 illustrates the active power output from a wind turbine 110 that operates such active vibration damping (curve 410 showing the active power output in kilowatt (kW)). Diagram 402 illustrates the tower accelerations a in m/s² (curve 420) as well as an average thereof. Diagram 403 finally illustrates an active damping term in accordance with which vibration damping is performed, wherein curve 430 is given in kilowatt. The curves are drawn over time t given in hours:minutes. It can be seen that the active damping sets in as acceleration reaches certain values. From the middle diagram 402, it can be seen that the active damping reduces the vibrations (i.e. reduces tower acceleration), which can be measured by respective acceleration sensors. It can further be seen from the upper curve 410 that as vibration damping sets in, variations of the active power output become more pronounced. The damping term 430 is provided as a vibration damping power signal which controls (is added to) the active power set point of the wind turbine. The damping term varies around a mean value of zero, so that the overall average active power output of the wind turbine does not change but corresponds to its active power set point.

The output power provided by wind turbines 110 can thus include significant variations at frequencies corresponding to the Eigenfrequencies of the components the vibration of which is to be compensated, such as the wind turbine tower, the generator, a gearbox, and the like. Typically frequency ranges of such damping term 430 lie in the range of 0.05 to 1 Hz, e.g. between 0.1 and 0.4 Hz. The amplitude may be up to 3% of the rated output power of the wind turbine. Significant power variations can thus result at the PCC 140, in particular if the damping terms of wind turbines 110 are in phase or close to being in phase.

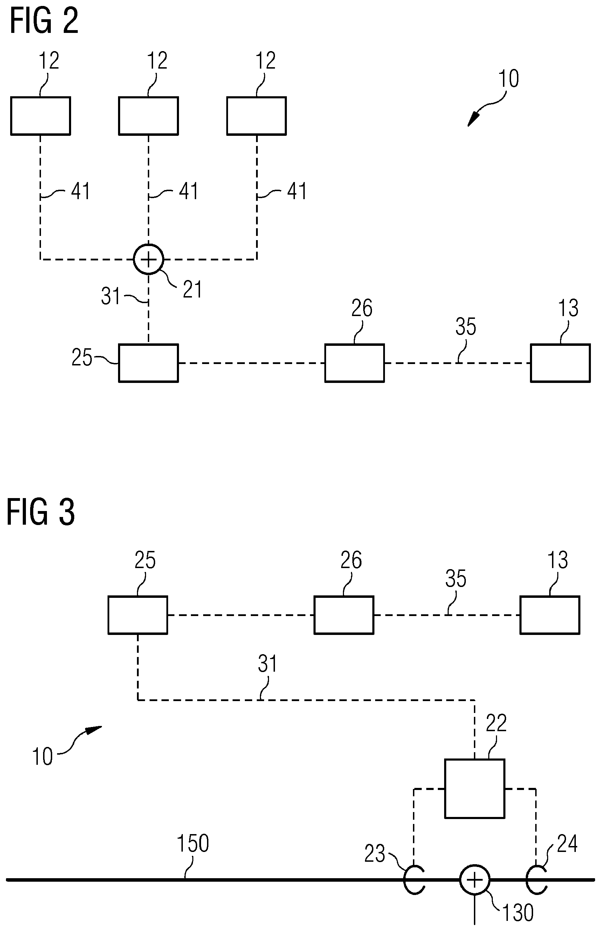

Fig. 6 is a flowchart illustrating a method that may be performed by the control system 10 to compensate such variations in the output power of the plant. An exemplary implementation of control system 10 is shown in Fig. 2. In step S1, an active vibration damping signal 41 is received from each wind turbine 110, in particular from the respective wind turbine controller 12. The active vibration damping signal 41 can for example correspond to the damping term 430 shown in Fig. 4, i.e. it may be a vibration damping power control signal in accordance with which the active power output of the wind turbines is controlled to provide active vibration damping. In other implementations, for example if torque control is performed to provide active vibration damping, a power variation resulting from such torque control may be derived by wind turbine controller 12 and may be provided as the active vibration damping signal 41. In even other implementations, the respective torque control signal that provides active vibration damping may directly be provided as signal 41 (plant controller 11 may then derive the power variations from such torque signal). In step S2, an indication signal 31 is generated by adding the active vibration damping signals 41 from the different wind turbines using a combiner 21. Indicating signal 31 thus indicates the output power variations of wind turbines 110 that are due to the active vibration damping. Filter 25 may be an inversion unit that inverts the indicating signal 31, and filter 26 may be a lead filter that compensates delays in signal communication and processing. Respective lead compensators are known in the art and may be employed here. It should be clear that units 25 and 26 may form part of a common signal-processing performed by plant controller 11, and that the order may be reversed. As a result of this processing, a variation compensation signal 35 is provided (step S3) and is communicated to the storage system controller 13. Storage system controller 13 now controls the power flow from energy storage system 120 in accordance with the received variation compensation signal (step S4). As an example, variation compensation signal 35 may correspond to an inverted sum of the damping terms 430 of Fig. 4 received from the wind turbine controllers 12.

If damping term 430 is positive, the active power set point of the wind turbines will be set higher, resulting in a higher power output from the wind turbines. The corresponding variation compensation signal will thus be negative, resulting in the controller 13 causing the energy storage system 120 to take up electrical power from node 130, i.e. to charge the energy storage system 120 (at the corresponding power level). Thereby, the combined electrical power output at PCC 140 is stabilized. Similarly, if the combined damping terms 430 are negative, the electrical power output from the wind turbines is reduced, and the variation compensation signal will positive. Controller 13 will thus cause the energy storage system 120 to provide electrical power to node 130, i.e. to discharge energy storage system 120. Again, in the combined power output at PCC 140, the variable power component present in the power output from wind turbines 110 will be compensated.

Such compensation is particularly efficient, since the damping term 430 is known and is communicated to the plant controller 11, which can thereby directly derive the required level of compensation. The active power provided by the wind power plant at PCC 140 is therefore smoothed efficiently and has no or only a very low variable power component that is due to the active vibration damping.

The combiner 21, inversion unit 25 and lead filter 26 may for example be provided by plant controller 11. However, the processing may be distributed differently between the different controllers.

Another example of providing a variation compensation signal to the storage system controller 13 is illustrated in Fig. 3. The indication signal 31 is hereby derived from active power measurements. The control system may for example comprise sensor 23 and/or sensor 24, each of which may measure voltage and current and may give out a power signal that comprises the respective voltage/current data or that comprises data for the output power derived from these measured values, or the control system may receive respective measurement values from other data sources.

The active power may for example be measured by sensor 23 prior to the combining with the power flow from the energy storage system at node 130, and/or may be measured by a sensor 24 after this combining. From respective measurements, a filter 22 may derive the indication signal 31. Filter 22 may for example filter out the DC component in the active power output (e.g. by subtracting a mean value or by subtracting the unmodified active power set point) and may further derive the variations within the frequency range of interest (i.e. the frequency range within which the active vibration damping is performed). Filter 22 may for this purpose employ signal-processing techniques known in the art, such as one or more phase locked loops (PLL) to identify a respective frequency component in the measured power signal, a Kalman filter, or the like. As a result of a respective processing, a signal 31 indicative of the variable power component comprised in the electrical power output of a plant that is due to the active vibration damping is obtained. The indication signal 31 may again be processed by inversion (unit 25) and by lead-filtering (lead filter 26) in order to obtain the variation compensation signal 35. Depending on whether feedforward cancellation (sensor 23) or feedback cancellation (sensor 24) is provided, a feedforward filter or a feedback filter may be provided in one the filters 25, 26, which may for example apply a respective cancellation gain, which may be fixed or adaptive. Storage system controller 13 controls energy storage system 120 in accordance with the resulting control signal 35, as explained above with respect to Figs. 1, 2, 4 and 6.

It should be clear that Figs. 2 and 3 only illustrate two possible examples of how the control system 10 can be implemented to provide a respective variation compensation signal 35; other implementations are also conceivable. For example, the lead filter 26 is optional. Further, the units 25 and 26 may be integrated in a common processing unit or filter 22 that derives, from the measurements by one or both of sensors 23, 24, a signal that is indicative of the variable power component present in the electrical power output and that further derives the respective variation compensation signal. Filters and units 22, 25, 26 may be implemented in hardware and/or software of control system 10, in particular power plant controller 11.

The method of Fig. 6 may also be performed with the implementation exemplified in Fig. 3, wherein steps S1 and S2 are exchanged by respective measuring and processing steps using sensors 23, 24 and filter 22 to obtain the indication signal 31.

Wind power plant 100 may be an onshore or an offshore wind power plant, or a mixed wind power plant. The controller 13 may for example be integrated with the plant controller 11 in some examples. In other examples, they are separate.

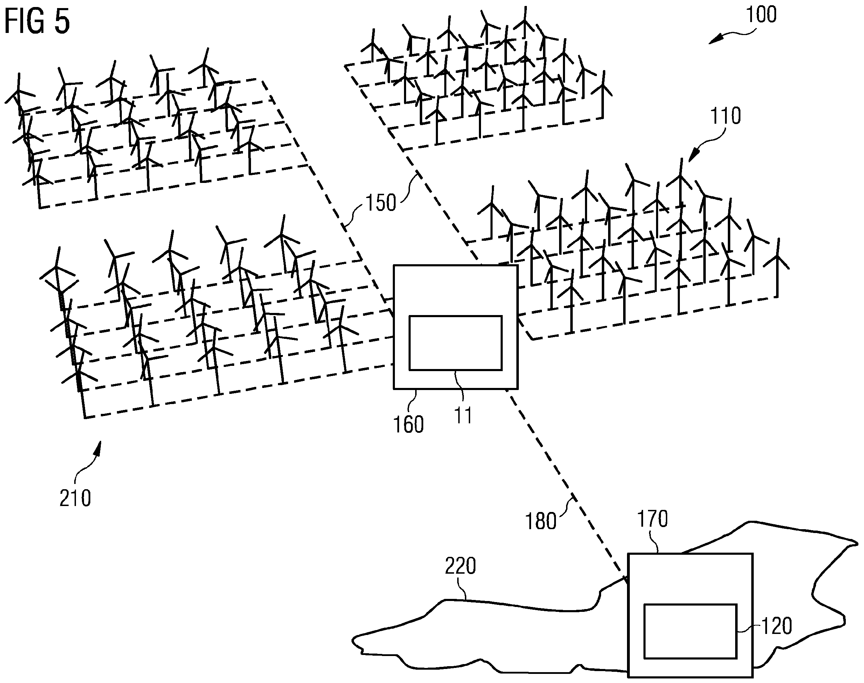

Fig. 5 shows a particular implementation as an offshore wind power plant 100. Wind turbines 110 are located offshore, and the generated electrical power is collected via the collector grid 150. The power plant controller 11 may be provided on an offshore substation 160. Offshore substation 160 may further comprise power conversion equipment, for example to convert and transform the generated electrical power to a voltage and/or frequency suitable for transportation to an onshore substation 170. Between the offshore site 210 and the onshore site 220, a respective subsea cable 180 for the electrical power transport and for communication may be provided. Via a respective communication connection in cable 180, the plant controller 11 may send the variation compensation signal 35 to the energy storage system 120 (in particular to controller 13) which is arranged at the onshore substation 170. Energy storage system 120 does thus not need to be arranged on an offshore platform, thereby facilitating assembly and maintenance. Still, electrical power without a variable power component due to active vibration damping can be provided to the power grid via onshore substation 170. In other examples, a different signal, such as the active vibration damping signal 41 or the indication signal 31 may be transmitted to the onshore site 220 instead, and the respective processing (as explained with respect to Figs. 2 and 3 for example) may be performed by the onshore substation 170 (for example by a respective part of the plant controller 11 located onshore). The skilled person will understand that several different implementations are conceivable and are within the scope of the present solution.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the provision of electrical power by a wind power plant (100) that comprises at least one wind turbine (110), wherein the at least one wind turbine (110) is configured to perform an active vibration damping that results in a variation of an active power output of the at least one wind turbine (110), wherein the method comprises:
- obtaining an indication signal (31) that is indicative of a variable power component present in an electrical power output of the wind power plant (100), wherein the variable power component results from the variation of the active power output of the at least one wind turbine (110) caused by the active vibration damping;
- deriving, from the indication signal (31), a variation compensation signal (35); and
- compensating at least partially the variable power component in the electrical power output of the wind power plant (100) by controlling an electrical power flow (125) into and out of an energy storage system (120) in accordance with the variation compensation signal (35), wherein the electrical power flow (125) of the energy storage system (120) is combined with the electrical power output of the wind power plant (100).

2. The method according to claim 1, wherein obtaining the indication signal (31) comprises receiving at least one active vibration damping signal (41) from the at least one wind turbine (110), wherein the active vibration damping signal (41) is indicative of the variation of the active power output of the at least one wind turbine, wherein the indication signal (31) corresponds to or is derived from the at least one received active vibration damping signal (41).

3. The method according to claim 2, wherein the active vibration damping signal (41) corresponds to a vibration damping power control signal (430) in accordance with which an electrical power generation of the respective wind turbine (110) is modulated to provide said active vibration damping and/or wherein the active vibration damping signal (41) is derived from a vibration damping torque control signal in accordance with which a torque of a generator of the respective wind turbine (110) is modulated to provide said active vibration damping.

4. The method according to any of the preceding claims, wherein obtaining the indication signal (31) comprises measuring a power signal at the electrical power output of the wind power plant (100) and/or at a power output of each of the at least one wind turbine (110) and deriving from the measured power signal the indication signal (31).

5. The method according to claim 4, wherein deriving from the measured power signal the indication signal (31) comprises applying a filter and/or a phase locked loop to the measured power signal to obtain the indication signal (31).

6. The method according to claim 4 or 5, wherein the power signal is measured after combining the electrical power flow (125) of the energy storage device (120) with the electrical power output of the wind power plant (100), wherein deriving the indication signal (31) and/or the variation compensation signal (35) from the power signal comprises applying a feedback filter.

7. The method according to claim 4 or 5, wherein the power signal is measured before combining the electrical power flow (125) of the energy storage device (120) with the electrical power output of the wind power plant (100), wherein deriving the indication signal (31) and/or the variation compensation signal (35) from the power signal comprises applying a feedforward filter.

8. The method according to any of the preceding claims, wherein deriving the variation compensation signal (35) from the indication signal (31) comprises filtering the indication signal by a filter (25, 26).

9. The method according to claim 8, wherein the filter that filters the indication signal comprises a lead filter (26), in particular a lead compensator.

10. The method according to any of the preceding claims, wherein deriving the variation compensation signal (35) from the indication signal (31) comprises inverting the indication signal.

11. The method according to any of the preceding claims, wherein the wind power plant (100) comprises plural wind turbines (110), wherein two or more of the plural wind turbines are configured to perform said active vibration damping, wherein the indication signal (31) is indicative of the combined variation of the active power output of the two or more wind turbines (110) caused by said active vibration damping.

12. The method according to claim 11, wherein obtaining the indication signal (31) comprises receiving an active vibration damping signal (41) from each of the two or more wind turbines (110) and combining, in particular adding, the active vibration damping signals (41) received from the two or more wind turbines (110).

13. The method according to any of the preceding claims, wherein the wind power plant (100) is an offshore wind power plant, wherein at least the indication signal (31) is obtained by an offshore controller (11) of the wind power plant (100) which offshore controller is located offshore, wherein the energy storage system (120) is arranged at an onshore site (220) and comprises a storage system controller (13), wherein the offshore controller (11) is configured to transmit at least one of the indication signal (31), the variation compensation signal (35) or a signal derived from any of these to the storage system controller (13), the storage system controller (13) controlling the electrical power flow (125) based on the respective received signal.

14. A control system configured to control the provision of electrical power by a wind power plant (100), wherein the wind power plant (100) comprises at least one wind turbine (110), wherein the at least one wind turbine (110) is configured to perform an active vibration damping that results in a variation of an active power output of the at least one wind turbine (110), wherein the control system (10) is further configured to control an electrical power flow (125) into and out of an energy storage system (120), wherein the electrical power flow (125) of the energy storage system (120) is combined with the electrical power output of the wind power plant (100), wherein the control system (10) is configured to perform the method of any of the preceding claims.

15. A computer program for controlling the provision of electrical power by a wind power plant (100) that comprises at least one wind turbine (110), wherein the computer program comprises control instructions which, when executed by a processing unit (15) of a control system (10) that controls the electrical power flow (125) of an energy storage system (120) coupled to an electrical power output of the wind power plant (100), cause the processing unit (15) to perform the method of any one of claims 1-13.
